# EUROPEAN PATENT APPLICATION

(11) **EP 4 280 742 A1**
(43) Date of publication of application: **22.11.2023**
(21) Application number: 21918688.9
(22) Date of filing: 18.01.2021
(51) Int. Cl.: H04W 72/04

(54) **BANDWIDTH PART DETERMINATION METHOD, BANDWIDTH PART DETERMINATION APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2021/072550
(87) International publication number: WO 2022/151488

(57) **Abstract**

The present disclosure relates to a bandwidth part determination method, a bandwidth part determination apparatus, and a storage medium. The bandwidth part (BWP) determination method is applied to a terminal, and comprises: determining a BWP, wherein the bandwidth of the BWP is greater than or equal to a first threshold value, and the first threshold value is the maximum transceiving bandwidth value corresponding to a terminal capability. By means of the present disclosure, a BWP, the bandwidth of which is greater than the maximum transceiving bandwidth value corresponding to a terminal capability, can be determined for a terminal, such that the number of times of frequency switching of the terminal can be reduced, thereby avoiding communication interruption.

## Description

### TECHNICAL FIELD

The disclosure relates to the field of wireless communication technologies, and particularly, to a method and an apparatus for determining a bandwidth part (BWP), and a storage medium.

### BACKGROUND

In a wireless communication system, a machine type communication (MTC) technology and a narrow band Internet of Things (NB-IoT) technology are provided for low-rate, high-latency, and other scenarios of IoT services. Due to the development of the IoT services, the MTC and NB-IoT technologies may not satisfy rate and delay requirements of the current IoT service. Therefore, a new reduced capability (redcap) terminal, referred simply to as an NR-lite, is designed to cover IoT service requirements.

In the related art, a capability of the redcap terminal is limited. If a transceiving capability bandwidth of the redcap terminal is within frequency range 1 (FR1), a bandwidth configured for the redcap terminal is 20 MHz, and if the transceiving capability bandwidth of the redcap terminal is within FR2, the bandwidth configured for the redcap terminal is 40 MHz. Therefore, a better frequency selective gain and a better frequency diversity gain may not be obtained at a relatively small bandwidth. Moreover, due to a limitation of the relatively small bandwidth, a synchronization signal block (Synchronization Signal and PBCH block, SSB) may not be included in an active bandwidth, so that frequent frequency hopping and radio resource managements (RRMs) are performed, which results in the communication problem of the terminal.

### SUMMARY

To overcome the problems existing in the related art, a method and an apparatus for determining a bandwidth part (BWP), and a storage medium are provided in the disclosure.

According to a first aspect of embodiments of the disclosure, a method for determining a BWP is provided. The method is applicable to a terminal. The method includes:
determining the BWP, in which a bandwidth of the BWP is larger than or equal to a first threshold value and the first threshold value is a maximum transceiving bandwidth corresponding to a capability of the terminal.

In an implementation, the method further includes:
determining a first frequency band in the BWP, in which a bandwidth of the first frequency band is less than the first threshold value; and the first frequency band is a frequency band monitored by the terminal by default.

In an implementation, the method further includes:
in response to a frequency resource required by frequency band monitoring indication information received by the terminal being located in the first frequency band, determining that a task indicated in the frequency band monitoring indication information to be performed by the terminal is performed based on the first frequency band.

In an implementation, the method further includes:
in response to a frequency resource required by frequency band monitoring indication information received by the terminal being not located in the first frequency band, determining that a frequency switch is performed based on a first number of time units.

In an implementation, the first number is determined based on at least one of:
a predefined rule;
a subcarrier spacing used before and after the frequency switch; or
a capability corresponding to the terminal.

In an implementation, the method includes:
in response to the first number being larger than at least one of a second number or a third number, determining that a transceiving task is stopped; or in response to the first number being equal to at least one of a second number or a third number, determining that a transceiving task is stopped; in which the second number is a number of scheduling delays of the terminal and the third number is a number of hybrid automatic repeat request (HARQ) feedback delays.

In an implementation, after determining that the frequency switch is performed based on the first number of time units, the method further includes:
in response to receiving a first indication message, determining that the first frequency band is re-monitored; or in response to not receiving other frequency band monitoring indication within a preset duration, determining that the first frequency band is re-monitored.

In an implementation, the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

In an implementation, determining the first frequency band in the BWP includes:
determining the first frequency band in the BWP based on at least one of a frequency domain position or a number of frequency domain resources; or determining the first frequency band in the BWP based on a predefined rule; or determining the first frequency band in the BWP based on a pre-configuration.

In an implementation, determining the first frequency band in the BWP based on the predefined rule includes:
determining the first frequency band in the BWP based on a frequency domain position and a frequency domain width corresponding to a monitored control resource set; or determining the first frequency band in the BWP based on a frequency domain position and a frequency domain width corresponding to monitoring a synchronization signal block (SSB); or determining the first frequency band in the BWP based on a frequency domain position and a frequency domain width of a corresponding physical random access channel (PRACH).

In an implementation, determining the first frequency band in the BWP based on the pre-configuration includes:
determining the first frequency band in the BWP based on a frequency domain position where a last transceiving task stayed and a corresponding bandwidth.

According to a second aspect of embodiments of the disclosure, a method for determining a BWP is provided. The method is applicable to a network side device. The method includes:
determining the BWP, in which a bandwidth of the BWP is larger than or equal to a first threshold value and the first threshold value is a maximum transceiving bandwidth corresponding to a capability of a terminal.

In an implementation, the method further includes:
determining a first frequency band in the BWP, in which a bandwidth of the first frequency band is less than the first threshold value; and the first frequency band is a frequency band monitored by the terminal by default.

In an implementation, the method further includes:
sending a first indication message, in which the first indication message is configured to indicate that the terminal re-monitors the first frequency band after performing a frequency switch.

In an implementation, the method further includes:
sending frequency band monitoring indication information, in which the frequency band monitoring indication information is configured to indicate that the terminal performs a task included in the frequency band monitoring indication information.

In an implementation, the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

In an implementation, determining the first frequency band in the BWP includes:
determining the first frequency band in the BWP based on at least one of one frequency domain position or a number of frequency domain resources; or determining the first frequency band in the BWP based on a predefined rule; or determining the first frequency band in the BWP based on a pre-configuration.

In an implementation, determining the first frequency band in the BWP based on the predefined rule includes:
determining the first frequency band in the BWP based on a frequency domain position and a frequency domain width corresponding to a monitored control resource set; or determining the first frequency band in the BWP based on a frequency domain position and a frequency domain width corresponding to monitoring an SSB; or determining the first frequency band in the BWP based on a frequency domain position and a frequency domain width of a corresponding PRACH.

In an implementation, determining the first frequency band in the BWP based on the pre-configuration includes:
determining the first frequency band in the BWP based on a frequency domain position where a last transceiving task stayed and a corresponding bandwidth.

According to a third aspect of embodiments of the disclosure, an apparatus for determining a BWP is provided. The apparatus is applicable to a terminal. The apparatus includes:
a determining module, configured to determine the BWP, in which a bandwidth of the BWP is larger than or equal to a first threshold value and the first threshold value is a maximum transceiving bandwidth corresponding to a capability of the terminal.

In an implementation, the determining module is further configured to:
determine a first frequency band in the BWP, in which a bandwidth of the first frequency band is less than the first threshold value; and the first frequency band is a frequency band monitored by the terminal by default; and the frequency band monitored by the terminal by default is a frequency band monitored by the terminal when other frequency band monitoring indication information is not received by the terminal and/or when other frequency band monitoring indication is not received by the terminal within a preset duration after receiving the other frequency band monitoring indication information.

In an implementation, the determining module is further configured to:
in response to a frequency resource required by frequency band monitoring indication information received by the terminal being located in the first frequency band, determine that a task indicated in the frequency band monitoring indication information to be performed by the terminal is performed based on the first frequency band.

In an implementation, the determining module is further configured to:
in response to a frequency resource required by frequency band monitoring indication information received by the terminal being not located in the first frequency band, determine that a frequency switch is performed based on a first number of time units.

In an implementation, the first number is determined based on at least one of:
a predefined rule;
a subcarrier spacing used before and after the frequency switch; or
a capability corresponding to the terminal.

In an implementation, the determining module is further configured to:
in response to the first number being larger than at least one of a second number or a third number, determine that a transceiving task is stopped; or in response to the first number being equal to at least one of a second number or a third number, determine that a transceiving task is stopped; in which the second number is a number of scheduling delays of the terminal and the third number is a number of HARQ feedback delays.

In an implementation, the determining module is further configured to:
in response to receiving a first indication message, determine that the first frequency band is re-monitored; or in response to not receiving other frequency band monitoring indication within a preset duration, determine that the first frequency band is re-monitored.

In an implementation, the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

In an implementation, the determining module is configured to:
determine the first frequency band in the BWP based on at least one of a frequency domain position or a number of frequency domain resources; or determine the first frequency band in the BWP based on a predefined rule; or determine the first frequency band in the BWP based on a pre-configuration.

In an implementation, the determining module is configured to:
determine the first frequency band in the BWP based on a frequency domain position and a frequency domain width corresponding to a monitored control resource set; or determine the first frequency band in the BWP based on a frequency domain position and a frequency domain width corresponding to monitoring an SSB; or determine the first frequency band in the BWP based on a frequency domain position and a frequency domain width of a corresponding PRACH.

In an implementation, the determining module is configured to:
determine the first frequency band in the BWP based on a frequency domain position where a last transceiving task stayed and a corresponding bandwidth.

According to a fourth aspect of embodiments of the disclosure, an apparatus for determining a BWP is provided. The apparatus is applicable to a network side device. The apparatus includes:
a determining module, configured to determine the BWP, in which a bandwidth of the BWP is larger than or equal to a first threshold value and the first threshold value is a maximum transceiving bandwidth corresponding to a capability of a terminal.

In an implementation, the determining module is further configured to:
determine a first frequency band in the BWP, in which a bandwidth of the first frequency band is less than the first threshold value; and the first frequency band is a frequency band monitored by the terminal by default.

In an implementation, the apparatus further includes:
a sending module, configured to send a first indication message, in which the first indication message is configured to indicate that the terminal re-monitors the first frequency band after performing a frequency switch.

In an implementation, the sending module is configured to:
send frequency band monitoring indication information, in which the frequency band monitoring indication information is configured to indicate that the terminal performs a task included in the frequency band monitoring indication information.

In an implementation, the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

In an implementation, the determining module is configured to:
determine the first frequency band in the BWP based on at least one of a frequency domain position or a number of frequency domain resources; or determine the first frequency band in the BWP based on a predefined rule; or determine the first frequency band in the BWP based on a pre-configuration.

In an implementation, the determining module is configured to:
determine the first frequency band in the BWP based on a frequency domain position and a frequency domain width corresponding to a monitored control resource set; or determine the first frequency band in the BWP based on a frequency domain position and a frequency domain width corresponding to monitoring an SSB; or determine the first frequency band in the BWP based on a frequency domain position and a frequency domain width of a corresponding PRACH.

In an implementation, the determining module is configured to:
determine the first frequency band in the BWP based on a frequency domain position where a last transceiving task stayed and a corresponding bandwidth.

According to a fifth aspect of embodiments of the disclosure, a device for determining a BWP is provided and includes:
a processor; and a memory configured to store instructions executable by the processor; in which the processor is configured to perform the method for determining a BWP in the first aspect or any implementation of the first aspect.

According to a sixth aspect of embodiments of the disclosure, a device for determining a BWP is provided and includes:
a processor; and a memory configured to store instructions executable by the processor; in which the processor is configured to perform the method for determining a BWP in the second aspect or any implementation of the second aspect.

According to a seventh aspect of embodiments of the disclosure, a non-transitory computer-readable storage medium is provided. When instructions in the storage medium are executed by a processor of a mobile terminal, the mobile terminal is caused to perform the method for determining a BWP in the first aspect or any implementation of the first aspect.

According to an eighth aspect of embodiments of the disclosure, a non-transitory computer-readable storage medium is provided. When instructions in the storage medium are executed by a processor of a mobile terminal, the mobile terminal is caused to perform the method for determining a BWP in the second aspect or in any one implementation of the second aspect.

The technical solutions according to embodiments of the disclosure may include the following beneficial effects. The BWP is determined for the terminal by the disclosure and the bandwidth of the BWP is larger than or equal to the maximum transceiving bandwidth corresponding to the capability of the terminal. So that the effect of reducing frequency switches of the terminal is achieved and the better frequency selective gain and the better frequency diversity gain may be obtained.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is an architecture diagram illustrating a communication system between a network device and a terminal according to some embodiments.
FIG. 2 is a flowchart illustrating a method for determining a BWP according to some embodiments.
FIG. 3 is a flowchart illustrating a method for determining a BWP according to some embodiments.
FIG. 4 is a flowchart illustrating a method for determining a BWP according to some embodiments.
FIG. 5 is a flowchart illustrating a method for determining a BWP according to some embodiments.
FIG. 6 is a flowchart illustrating a method for determining a BWP according to some embodiments.
FIG. 7 is a flowchart illustrating a method for determining a BWP according to some embodiments.
FIG. 8 is a flowchart illustrating a method for determining a BWP according to some embodiments.
FIG. 9 is a flowchart illustrating a method for determining a BWP according to some embodiments.
FIGS. 10a to10c are flowcharts illustrating a method for determining a BWP according to some embodiments.
FIG. 11 is a flowchart illustrating a method for determining a BWP according to some embodiments.
FIG. 12 is a flowchart illustrating a method for determining a BWP according to some embodiments.
FIG. 13 is a flowchart illustrating a method for determining a BWP according to some embodiments.
FIG. 14 is a flowchart illustrating a method for determining a BWP according to some embodiments.
FIGS. 15a to15c are flowcharts illustrating a method for determining a BWP according to some embodiments.
FIG. 16 is a block diagram illustrating an apparatus for determining a BWP according to some embodiments.
FIG. 17 is a block diagram illustrating an apparatus for determining a BWP according to some embodiments.
FIG. 18 is a block diagram illustrating a device for determining a BWP according to some embodiments.
FIG. 19 is a block diagram illustrating a device for determining a BWP according to some embodiments.

### DETAILED DESCRIPTION

Reference will now be made in detail to embodiments, examples of which are illustrated in the accompanying drawings. The following description refers to the accompanying drawings in which the same numbers in different accompanying drawings represent the same or similar elements unless otherwise represented. The implementations set forth in the following description of the embodiments do not represent all implementations consistent with the disclosure. Instead, they are merely examples of apparatuses and methods consistent with aspects related to the disclosure as recited in the appended claims.

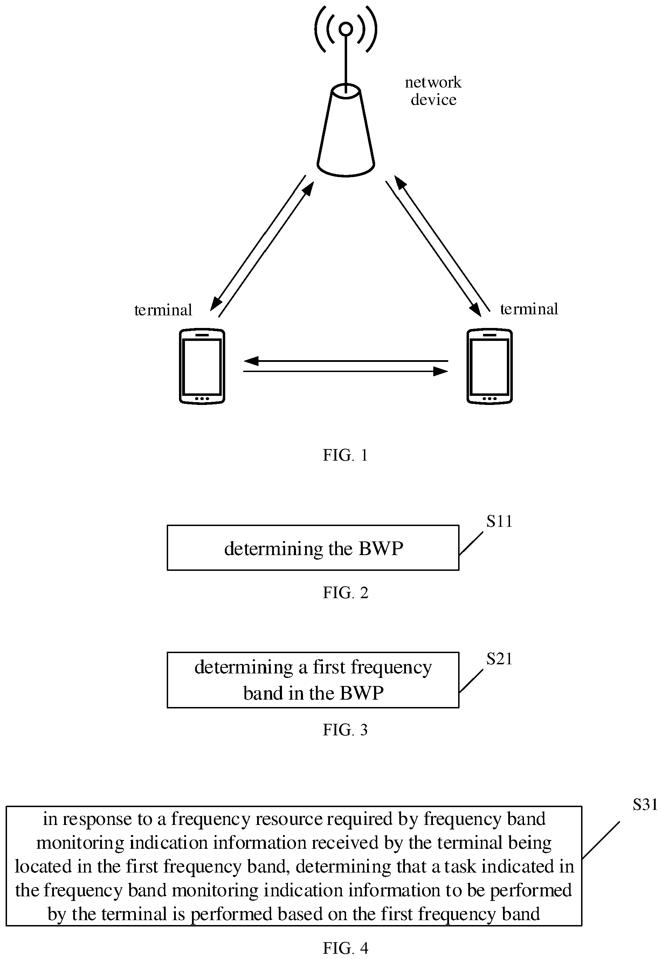

FIG. 1 is an architecture diagram illustrating a communication system between a network device and a terminal according to some embodiments. A communication method in embodiments of the disclosure is applicable to the architecture diagram of the communication system as illustrated in FIG. 1. As illustrated in FIG. 1, a network side device may send a signaling based on the architecture as illustrated in FIG. 1.

It may be understood that, the communication system of the terminal and the network device as illustrated in FIG. 1 is only illustrated. The wireless communication system may further include other network devices such as a core network device, a wireless relay device, and a wireless backhaul device, which are not illustrated in FIG. 1. A number of network devices and a number of terminals included in the wireless communication system are not limited in embodiments of the disclosure.

It should be further understood that, the wireless communication system in embodiments of the disclosure is a network that provides wireless communication functions. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA) and carrier sense multiple access with collision avoidance. The network may be classed into a second generation (2G) network, a third generation (3G) network, a fourth generation (4G) network, or a future evolution network such as a fifth generation (5G) according to capacities, rates, delays and other factors of different networks. For example, the 5G network may also be referred to as a new radio (NR) network. For ease of description, the wireless communication network is simply referred to as the network in the disclosure sometimes.

Further, the network device involved in the disclosure may also be referred to as a wireless access network device. The wireless access network device may be a base station, an evolved node B (eNB), a home base station, an access point (AP) in a wireless fidelity (Wi-Fi) system, a wireless relay node, a wireless backhaul node, a transmission point (TP), a transmission and reception point (TRP), or the like. The wireless access network device also may be a next generation node B (gNB) in an NR system. The wireless access network device also may be a component or a part of devices constituting the base station. The network device may be a vehicle-mounted device in an Internet of Vehicles (V2X) communication system. It should be understood that, a specific technology and a specific device form adopted by the network device are not limited in the embodiments of the disclosure.

Further, the terminal involved in the disclosure further may be referred to as a terminal device, a user equipment (UE), a mobile station (MS), a mobile terminal (MT), or the like, which is a device that provides voice and/or data connectivity to a user, for example, a handheld device or vehicle-mounted device with a wireless connection function or the like. At present, some terminals include, for example, mobile phones, pocket personal computers (PPCs), palm computers, personal digital assistants (PDAs), notebook computers, tablet computers, wearable devices, vehicle-mounted devices, or the like. In addition, the terminal device may be the vehicle-mounted device in the V2X communication system. It should be understood that, a specific technology and a specific device form adopted by the terminal are not limited in the embodiments of the disclosure.

The reduced capability user equipment (LTE). In a communication system such as a long term evolution (LTE) 4G system, in order to support Internet of Things (IoT) services, a machine type communication (MTC) technology and a narrow band IoT (NB-IoT) technology are provided for low-rate, high-latency, and other scenarios such as meter reading and environment monitoring. The NB-IoT technology may support a maximum transmission rate of several hundred kbps and the MTC technology may support a maximum transmission rate of several Mbps. However, with the continuous development of IoT services such as video surveillance, smart home, wearable devices, industrial sensing and monitoring, and other services, the services usually require a rate of dozens to 100 Mbps and also have a relatively high requirement for the delay. Therefore, the MTC technology and the NB-IoT technology are difficult to satisfy the requirements of the above services. Based on this situation, a new UE is redesigned in 5G NR, to cover requirements of middle-end IoT devices. In a current 3rd Generation Partnership Project (3GPP) standardization, the new type terminal is referred to a reduced capability (redcap) terminal or referred to an NR-lite. A bandwidth configured for the redcap terminal is relatively small. Therefore, for the redcap terminal, since a size of the bandwidth is reduced, in case of FR1, the bandwidth configured for the redcap terminal is 20 MHz, and in case of FR2, the bandwidth configured for the redcap terminal is 40 MHz. Therefore, the better frequency selective gain and the better frequency diversity gain may not be obtained at the relatively small bandwidth.

Furthermore, due to a limitation of the relatively small bandwidth, a synchronization signal block (SSB) may not be included in an active BWP. Thus frequent frequency switches and synchronizations and radio resource managements (RRMs) are required. However, in a frequency switch process, there may be a frequency switch delay of about 3 milliseconds (ms) and frequent frequency switches result in the communication interruption.

Therefore, a method for determining a BWP is provided in the disclosure and the BWP determined for the terminal is larger than a transceiving bandwidth corresponding to a capability of the terminal, to solve the communication interruption problem caused due to frequent frequency switches and reach the better frequency selective gain and the better frequency diversity gain.

FIG. 2 is a flowchart illustrating a method for determining a BWP according to some embodiments. As illustrated in FIG. 2, the method for determining a BWP is applicable to a terminal. The method includes the following step.

At step S11, the BWP is determined.

In embodiments of the disclosure, a bandwidth of the BWP is larger than or equal to a first threshold value. The first threshold value is a maximum transceiving bandwidth corresponding to a capability of the terminal.

In some embodiments of the disclosure, the terminal may be a redcap terminal. For example, when the redcap terminal is within FR1, the corresponding maximum transceiving bandwidth is 20 MHz, that is, the first threshold value may be 20 MHz. In embodiments of the disclosure, the determined BWP is larger than or equal to 20 MHz. When the redcap terminal is within FR2, the corresponding maximum transceiving bandwidth is 40 MHz, that is, the first threshold value may be 40 MHz. In embodiments of the disclosure, the determined BWP is larger than or equal to 40 MHz. It is only illustrative and is not limited in the disclosure.

In embodiments of the disclosure, the bandwidth of the BWP configured for the terminal larger than or equal to the maximum transceiving bandwidth corresponding to the capability of the terminal is determined, which may reduce frequency switches of the terminal and effectively avoid the communication interruption caused due to frequent switches. The better frequency selective gain and the better frequency diversity gain may be further obtained.

FIG. 3 is a flowchart illustrating a method for determining a BWP according to some embodiments. As illustrated in FIG. 3, the method for determining a BWP is applicable to a terminal. The method further includes the following step.

At step S21, a first frequency band is determined in the BWP.

In embodiments of the disclosure, a bandwidth of the first frequency band is less than the first threshold value. The first frequency band is a frequency band monitored by the terminal by default (a default subband).

In an implementation, the frequency band monitored by the terminal by default is a frequency band monitored by the terminal in response to not receiving any other frequency band monitoring indication.

In an implementation, the frequency band monitored by the terminal by default is a frequency band monitored by the terminal in response to not receiving other frequency band monitoring indication information within a preset duration relative to the last received frequency band monitoring indication information.

In some embodiments of the disclosure, not receiving the other frequency band monitoring indication information may be not receiving one or more of: a transceiving task, a measurement task, or a monitoring task, and in such case, the terminal monitors the first frequency band.

Further, the transceiving task, the measurement task, or the monitoring task includes at least one of:
a data transmission based on other frequency band;
a measurement based on other frequency band;
monitoring control information based on other frequency band;
sending control information based on other frequency band; or
sending a sounding channel based on other frequency band.

FIG. 4 is a flowchart illustrating a method for determining a BWP according to some embodiments. As illustrated in FIG. 4, the method for determining a BWP is applicable to a terminal. The method further includes the following step.

At step S31, in response to a frequency resource required by frequency band monitoring indication information received by the terminal being located in the first frequency band, it is determined that a task indicated in the frequency band monitoring indication information to be performed by the terminal is performed based on the first frequency band.

In embodiments of the disclosure, when the terminal receives the frequency band monitoring indication information from the network and a frequency resource required by a receiving/sending task, for example, is located in the first frequency band, the terminal may perform the task indicated in the frequency band monitoring indication information to be performed by the terminal based on the first frequency band. So that the terminal does not need to perform the frequency switch, which avoids the communication problem of the terminal due to frequent frequency switches.

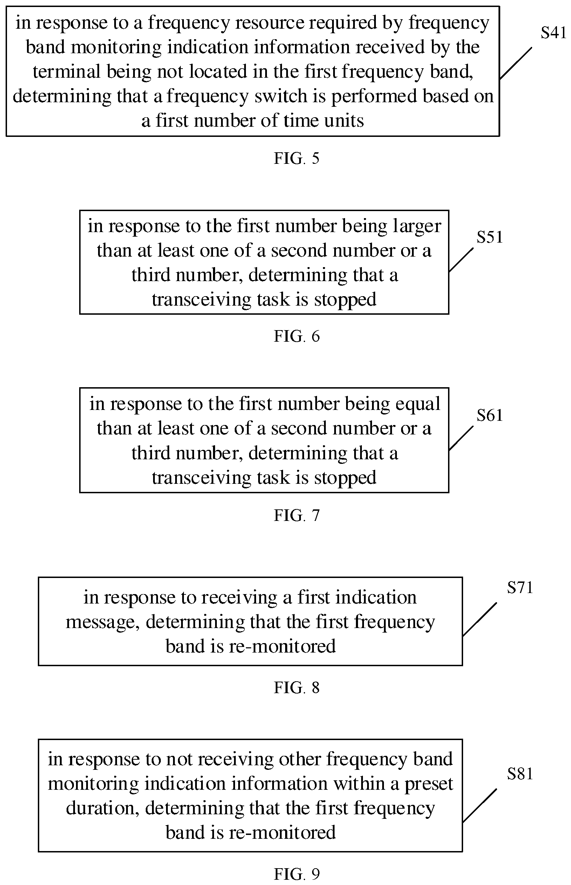

FIG. 5 is a flowchart illustrating a method for determining a BWP according to some embodiments. As illustrated in FIG. 5, the method for determining a BWP is applicable to a terminal. The method further includes the following step.

At step S41, in response to a frequency resource required by frequency band monitoring indication information received by the terminal not being located in the first frequency band, it is determined that a frequency switch is performed based on a first number of time units.

In embodiments of the disclosure, when the frequency resource required by the frequency band monitoring indication information received by the terminal is not located in the first frequency band, adjustment may be made by means of the frequency switch, that is, the frequency switch is performed based on the first number of time units, to perform the task included in the frequency band monitoring indication information. It needs to be noted that, in the frequency switch process, any transceiving task is not performed within the first number of time units.

In embodiments of the disclosure, the first number is determined based on at least one of:
a predefined rule;
a subcarrier spacing used before and after the frequency switch; or
a capability corresponding to the terminal.

The first number is determined based on the predefined rule, for example, the first number may be defined as N subframes or as N symbols in a communication protocol. Different terminal capabilities correspond to different values of the first number.

FIG. 6 is a flowchart illustrating a method for determining a BWP according to some embodiments. As illustrated in FIG. 6, the method for determining a BWP is applicable to a terminal. The method further includes the following step.

At step S51, in response to the first number being larger than at least one of a second number or a third number, it is determined that a transceiving task is stopped.

In embodiments of the disclosure, the second number is a number of scheduling delays of the terminal and the third number is a number of hybrid automatic repeat request (HARQ) feedback delays.

In some embodiments of the disclosure, when the number of time units required by the terminal for the frequency switch is larger than the number of scheduling delays of the terminal, or the number of time units required by the terminal for the frequency switch is larger than the number of HARQ feedback delays, or the number of time units required by the terminal for a frequency switch is larger than a sum of the number of scheduling delays of the terminal and the number of HARQ feedback delays, the terminal aborts this receiving or transmitting task and determines that transmission of the receiving or transmitting task fails.

FIG. 7 is a flowchart illustrating a method for determining a BWP according to some embodiments. As illustrated in FIG. 7, the method for determining a BWP is applicable to a terminal. The method further includes the following step.

At step S61, in response to the first number being equal than at least one of a second number or a third number, it is determined that a transceiving task is stopped.

In embodiments of the disclosure, the second number is a number of scheduling delays of the terminal and the third number is a number of HARQ feedback delays.

In some embodiments of the disclosure, when the number of time units required by the terminal for the frequency switch is equal to the number of scheduling delays of the terminal, or the number of time units required by the terminal for the frequency switch is larger than the number of HARQ feedback delays, or the number of time units required by the terminal for the frequency switch is larger than a sum of the number of scheduling delays of the terminal and the number of HARQ feedback delays, the terminal aborts this receiving or transmitting task and determines that transmission of the receiving or transmitting task fails.

FIG. 8 is a flowchart illustrating a method for determining a BWP according to some embodiments. As illustrated in FIG. 8, after determining that the frequency switch is performed based on the first number of time units, the method for determining a BWP is applicable to a terminal. The method further includes the following step.

At step S71, in response to receiving a first indication message, it is determined that the first frequency band is re-monitored.

In embodiments of the disclosure, the network side device may send the first indication message for indicating that the terminal re-monitors the first frequency band. In an implementation, a signaling where the first indicating message for indicating that the terminal monitors the first frequency band is located may be a radio resource control (RRC) signaling. In an implementation, a signaling where the first indicating message for indicating that the terminal monitors the first frequency band is located may be a media access control (MAC) control element (CE). In an embodiment implementation, a signaling where the first indicating message for indicating that the terminal monitors the first frequency band is located may be downlink control information.

FIG. 9 is a flowchart illustrating a method for determining a BWP according to some embodiments. As illustrated in FIG. 9, after determining that the frequency switch is performed based on the first number of time units, the method for determining a BWP is applicable to a terminal. The method further includes the following step.

At step S81, in response to not receiving other frequency band monitoring indication within a preset duration, it is determined that the first frequency band is re-monitored.

In embodiments of the disclosure, when the terminal does not receive the other frequency band monitoring indication within the preset duration after receiving the frequency band monitoring indication, the terminal determines that the first frequency band is re-monitored. For example, the terminal determines that the first frequency band is re-monitored when not receiving the other frequency band monitoring indication within N consecutive time units after receiving the last band monitoring indication.

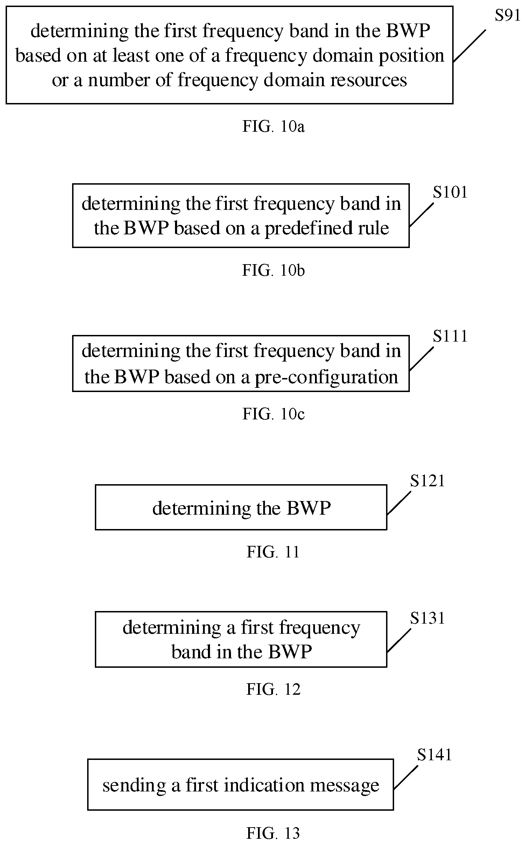

FIGS. 10a to10c are flowcharts illustrating a method for determining a BWP according to some embodiments. The first frequency band is determined in the BWP, which includes the following step.

As illustrated in FIG. 10a, at step S91, the first frequency band is determined in the BWP based on at least one of a frequency domain position or a number of frequency domain resources. In other words, the first frequency band in the BWP (that is, the frequency band monitored by the terminal by default) may be determined based on the frequency domain position, or may be determined based on the number of frequency domain resources, or may be jointly determined based on the frequency domain position and the number of frequency domain resources.

As illustrated in FIG. 10b, at step S101, the first frequency band is determined in the BWP based on a predefined rule.

In embodiments of the disclosure, for example, for a downlink BWP, the first frequency band may be determined in the BWP based on a frequency domain position and a frequency domain width corresponding to a monitored control resource set; or the first frequency band may be determined in the BWP based on a frequency domain position and a frequency domain width corresponding to monitoring an SSB. For an uplink BWP, the first frequency band in the BWP may be determined based on a frequency domain position and a frequency domain width of a corresponding PRACH.

As illustrated in FIG. 10c, at step S 111, the first frequency band is determined in the BWP based on a pre-configuration.

In embodiments of the disclosure, the network side device may configure the first frequency band in the BWP of the capability of the terminal. For example, the network side device may determine the bandwidth of the first frequency band. The frequency domain position where the last transceiving task stayed is an initial position of the first frequency band and the first frequency band is determined in the BWP based on the determined bandwidth of the first frequency band and the determined initial position.

Based on the same/similar conception, a method for determining a BWP is further provided in embodiments of the disclosure.

FIG. 11 is a flowchart illustrating a method for determining a BWP according to some embodiments. As illustrated in FIG. 11, the method for determining a BWP is applicable to a network side device. The method includes the following step.

At step S121, the BWP is determined.

In embodiments of the disclosure, a bandwidth of the BWP is larger than or equal to a first threshold value. The first threshold value is a maximum transceiving bandwidth corresponding to a capability of the terminal.

In some embodiments of the disclosure, the terminal may be a redcap terminal. For example, when the redcap terminal is within FR1, the corresponding maximum transceiving bandwidth is 20 MHz, that is, the first threshold value may be 20 MHz. In embodiments of the disclosure, the determined BWP is larger than or equal to 20 MHz. When the redcap terminal is within FR2, the corresponding maximum transceiving bandwidth is 40 MHz, that is, the first threshold value may be 40 MHz. In embodiments of the disclosure, the determined BWP is larger than or equal to 40 MHz. It is only illustrative and is not limited in the disclosure.

In embodiments of the disclosure, the bandwidth of the BWP configured for the terminal larger than or equal to the maximum transceiving bandwidth corresponding to the capability of the terminal is determined, which may reduce frequency switches of the terminal and effectively avoid the communication interruption caused due to frequent switches. The better frequency selective gain and the better frequency diversity gain may be further obtained.

FIG. 12 is a flowchart illustrating a method for determining a BWP according to some embodiments. As illustrated in FIG. 12, the method for determining a BWP is applicable to a terminal. The method further includes the following step.

At step S131, a first frequency band is determined in the BWP.

In embodiments of the disclosure, a bandwidth of the first frequency band is less than the first threshold value. The first frequency band is a frequency band monitored by the terminal by default.

In an implementation, the frequency band monitored by the terminal by default is a frequency band monitored by the terminal in response to not receiving any other frequency band monitoring indication.

In an implementation, the frequency band monitored by the terminal by default is a frequency band monitored by the terminal in response to not receiving other frequency band monitoring indication information within a preset duration relative to the last received frequency band monitoring indication information.

In some embodiments of the disclosure, not receiving the other frequency band monitoring indication information may be not receiving one or more of: a transceiving task, a measurement task, or a monitoring task, and in such case, the terminal monitors the first frequency band.

Further, the transceiving task, the measurement task, or the monitoring task includes at least one of:
a data transmission based on other frequency band;
a measurement based on other frequency band;
monitoring control information based on other frequency band;
sending control information based on other frequency band; or
sending a sounding channel based on other frequency band.

FIG. 13 is a flowchart illustrating a method for determining a BWP according to some embodiments. As illustrated in FIG. 13, the method for determining a BWP is applicable to a network side device. The method further includes the following step.

At step S141, a first indication message is sent.

In embodiments of the disclosure, the first indication message is configured to indicate that the terminal re-monitors the first frequency band after performing a frequency switch. In an implementation, a signaling where the first indicating message of the network side device for indicating that the terminal monitors the first frequency band is located may be an RRC signaling. In an implementation, a signaling where the first indicating message of the network side device for indicating that the terminal monitors the first frequency band is located may be a MAC CE. In an embodiment implementation, a signaling where the first indicating message of the network side device for indicating that the terminal monitors the first frequency band is located may be downlink control information.

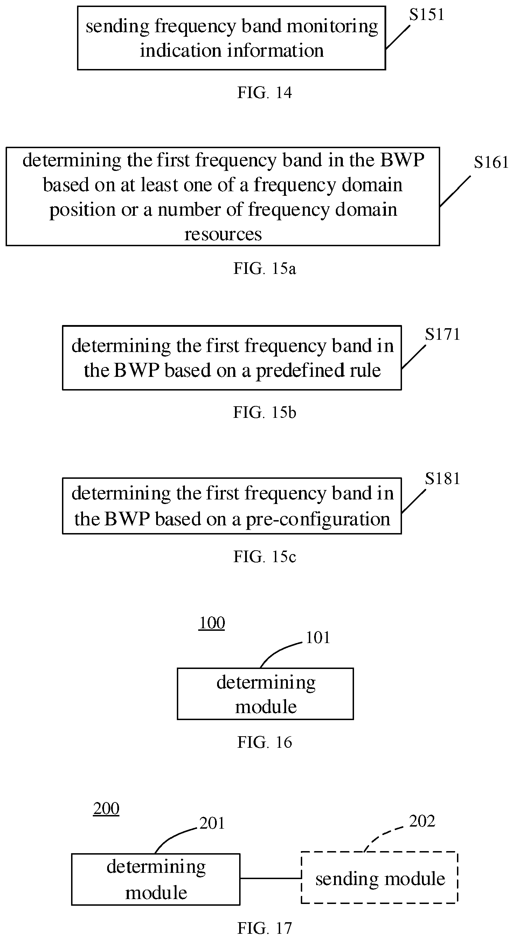

FIG. 14 is a flowchart illustrating a method for determining a BWP according to some embodiments. As illustrated in FIG. 14, the method for determining a BWP is applicable to a network side device. The method further includes the following step.

At step S151, frequency band monitoring indication information is sent.

In embodiments of the disclosure, the frequency band monitoring indication information is configured to indicate that the terminal performs a task included in the frequency band monitoring indication information. The terminal determines a monitored frequency band based on an indication in the frequency band monitoring indication information.

FIGS. 15a to15c are flowcharts illustrating a method for determining a BWP according to some embodiments. The first frequency band is determined in the BWP, which includes the following step.

As illustrated in FIG. 15a, at step S161, the first frequency band is determined in the BWP based on at least one of a frequency domain position or a number of frequency domain resources. In other words, the first frequency band in the BWP (that is, the frequency band monitored by the terminal by default) may be determined based on the frequency domain position, or may be determined based on the number of frequency domain resources, or may be jointly determined based on the frequency domain position and the number of frequency domain resources.

As illustrated in FIG. 15b, at step S171, the first frequency band is determined in the BWP based on a predefined rule.

In embodiments of the disclosure, for example, for a downlink BWP, the first frequency band may be determined in the BWP based on a frequency domain position and a frequency domain width corresponding to a monitored control resource set; or the first frequency band may be determined in the BWP based on a frequency domain position and a frequency domain width corresponding to monitoring an SSB. For an uplink BWP, the first frequency band in the BWP may be determined based on a frequency domain position and a frequency domain width of a corresponding PRACH.

As illustrated in FIG. 15c, at step S181, the first frequency band is determined in the BWP based on a pre-configuration.

In embodiments of the disclosure, the network side device may configure the first frequency band in the BWP of the capability of the terminal. For example, the network side device may determine the bandwidth of the first frequency band. The frequency domain position where the last transceiving task stayed is an initial position of the first frequency band and the first frequency band is determined in the BWP based on the determined bandwidth of the first frequency band and the determined initial position.

Based on the same conception, an apparatus for configuring a BWP is further provided in embodiments of the disclosure.

It may be understood that, the apparatus for determining a BWP provided in embodiments of the disclosure includes hardware structures and/or software modules that perform various functions in order to achieve the above functions. In combination with modules and algorithm steps of examples described in embodiments of the disclosure, the embodiments of the disclosure may be implemented in a form of hardware or a combination of hardware and computer software. Whether a certain function is executed by the hardware or the computer software driving the hardware depends on specific applications and design constraints of the technical solutions. Those skilled in the art may adopt different methods for each specific application to implement the described functions, but such implementation should not be considered as beyond the scope of the technical solutions in embodiments of the disclosure.

FIG. 16 is a block diagram illustrating an apparatus for determining a BWP according to some embodiments. As illustrated in FIG. 16, the apparatus 100 for determining a BWP is applicable to a terminal and includes a determining module 101.

The determining module 101 is configured to determine a BWP. A bandwidth of the BWP is larger than or equal to a first threshold value and the first threshold value is a maximum transceiving bandwidth corresponding to a capability of the terminal.

In embodiments of the disclosure, the determining module 101 is further configured to:
determine a first frequency band in the BWP. A bandwidth of first frequency band is less than first threshold value. The first frequency band is a frequency band monitored by the terminal by default. In embodiments of the disclosure, the determining module 101 is further configured to:
in response to a frequency resource required by frequency band monitoring indication information received by the terminal being located in the first frequency band, determine that a task indicated in the frequency band monitoring indication information to be performed by the terminal is performed based on the first frequency band.

In embodiments of the disclosure, the determining module 101 is further configured to:
in response to a frequency resource required by frequency band monitoring indication information received by the terminal being not located in the first frequency band, determine that a frequency switch is performed based on a first number of time units.

In embodiments of the disclosure, the first number is determined based on at least one of:
a predefined rule;
a subcarrier spacing used before and after the frequency switch; or
a capability corresponding to the terminal.

In embodiments of the disclosure, the determining module 101 is further configured to:
in response to the first number being larger than at least one of a second number or a third number, determine that a transceiving task is stopped; or in response to the first number being equal to at least one of a second number or a third number, determine that a transceiving task is stopped; the second number is a number of scheduling delays of the terminal and the third number is a number of HARQ feedback delays.

In embodiments of the disclosure, the determining module 101 is further configured to:
in response to receiving a first indication message, determine that the first frequency band is re-monitored; or in response to not receiving other frequency band monitoring indication within a preset duration, determine that the first frequency band is re-monitored.

In embodiments of the disclosure, the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

In embodiments of the disclosure, the determining module 101 is configured to:
determine the first frequency band in the BWP based on at least one of a frequency domain position or a number of frequency domain resources; or determine the first frequency band in the BWP based on a predefined rule; or determine the first frequency band in the BWP based on a pre-configuration.

In embodiments of the disclosure, the determining module 101 is configured to:
determine the first frequency band in the BWP based on a frequency domain position and a frequency domain width corresponding to a monitored control resource set; or determine the first frequency band in the BWP based on a frequency domain position and a frequency domain width corresponding to monitoring an SSB; or determine the first frequency band in the BWP based on a frequency domain position and a frequency domain width of a corresponding PRACH.

In embodiments of the disclosure, the determining module 101 is configured to:
determine the first frequency band in the BWP based on a frequency domain position where a last transceiving task stayed and a corresponding bandwidth.

FIG. 17 is a block diagram illustrating an apparatus for determining a BWP according to some embodiments. As illustrated in FIG. 17, the apparatus 200 for determining a BWP is applicable to a terminal and includes a determining module 201.

The determining module 201 is configured to determine a BWP. A bandwidth of the BWP is larger than or equal to a first threshold value and the first threshold value is a maximum transceiving bandwidth corresponding to a capability of a terminal.

In embodiments of the disclosure, the determining module 201 is further configured to:
determine a first frequency band in the BWP. A bandwidth of first frequency band is less than first threshold value. The first frequency band is a frequency band monitored by the terminal by default. In embodiments of the disclosure, as illustrated in FIG. 17, the apparatus further includes a sending module 202.

The sending module 202 is configured to send a first indication message. The first indication message is configured to indicate that the terminal re-monitors the first frequency band after performing a frequency switch.

In embodiments of the disclosure, the sending module 202 is configured to:
send frequency band monitoring indication information. The frequency band monitoring indication information is configured to indicate that the terminal performs a task included in the frequency band monitoring indication information.

In embodiments of the disclosure, the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

In embodiments of the disclosure, the determining module 201 is configured to:
determine the first frequency band in the BWP based on at least one of a frequency domain position or a number of frequency domain resources; or determine the first frequency band in the BWP based on a predefined rule; or determine the first frequency band in the BWP based on a pre-configuration.

In embodiments of the disclosure, the determining module 201 is configured to:
determine the first frequency band in the BWP based on a frequency domain position and a frequency domain width corresponding to a monitored control resource set; or determine the first frequency band in the BWP based on a frequency domain position and a frequency domain width corresponding to monitoring an SSB; or determine the first frequency band in the BWP based on a frequency domain position and a frequency domain width of a corresponding PRACH.

In embodiments of the disclosure, the determining module 201 is configured to:
determine the first frequency band in the BWP based on a frequency domain position where a last transceiving task stayed and a corresponding bandwidth.

With regard to the apparatus in the above embodiments, the specific way in which each module performs the operation has been described in detail in the embodiments of the method and will not be elaborated herein.

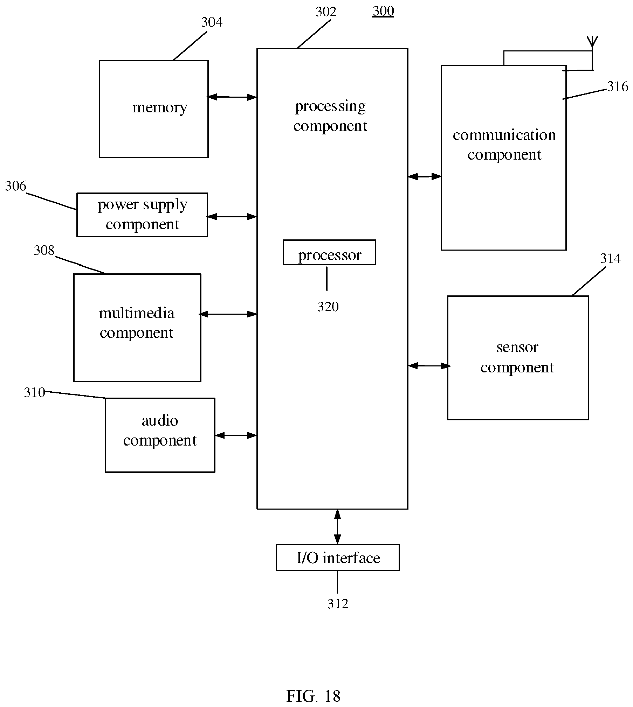

FIG. 18 is a block diagram illustrating a device 300 for determining a BWP according to some embodiments. For example, the device 300 may be a mobile phone, a computer, a digital broadcasting terminal, a messaging device, a game console, a tablet device, a medical equipment, a fitness equipment, a personal digital assistant, etc.

As illustrated in FIG. 18, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above methods. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and the relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on communication standard, such as Wi-Fi, 2G or 3G, or their combination. In some embodiments, the communication component 316 receives broadcast signals or broadcast-related information from an external broadcast management system via a broadcast channel. In some embodiments, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In some embodiments, the device 300 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above methods.

In some embodiments, a non-transitory computer readable storage medium is further provided which includes instructions, such as the memory 304 including instructions. The instructions may be executed by the processor 320 of the device 300 to complete the above methods. For example, the non-transitory computer-readable storage medium may be a ROM, a random access memory (RAM), a CD-ROM, a magnetic tape, a floppy disk, an optical data storage device, etc.

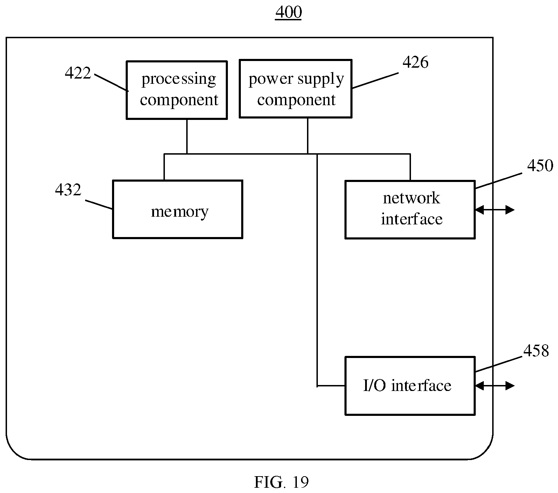

FIG. 19 is a block diagram illustrating a device 400 for determining a BWP according to some embodiments. For example, the device 400 may be provided as a server. As illustrated in FIG. 19, the device 400 includes a processing component 422, which further includes one or more processors, and memory resources represented by a memory 432, which are configured to store instructions executable by the processing component 422, for example, an application. The application stored in the memory 432 may include one or more modules each of which corresponds to a set of instructions. In addition, the processing component 422 is configured to execute instructions, to perform the above methods.

The device 400 may further include a power supply component 426 configured to execute power management of the device 400, and a wired or wireless network interface 450 configured to connect the device 400 to a network, and an input/output(I/O) interface 458. The device 400 may operate an operating system stored in the memory 432, for example, Windows Server^{™}, Mac OS X^{™}, Unix^{™}, Linux^{™}, FreeBSD^{™}.

It may be further understood that, "a plurality of" or "multiple" in the disclosure means two or above, which is similar to other quantifiers. The term may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship. The singular forms "a", "the" and "said are also intended to include plural forms, unless the context clearly indicates otherwise.

It should be further understood that, although the terms "first", "second", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this disclosure, first information may also be referred to as second information, and similarly, second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a bandwidth part (BWP), applicable to a terminal, the method comprising:
determining the BWP, wherein a bandwidth of the BWP is larger than or equal to a first threshold value and the first threshold value is a maximum transceiving bandwidth corresponding to a capability of the terminal.

2. The method of claim 1, further comprising:
determining a first frequency band in the BWP, wherein a bandwidth of the first frequency band is less than the first threshold value; and
the first frequency band is a frequency band monitored by the terminal by default.

3. The method of claim 2, further comprising:
in response to a frequency resource required by frequency band monitoring indication information received by the terminal being located in the first frequency band, determining that a task indicated in the frequency band monitoring indication information to be performed by the terminal is performed based on the first frequency band.

4. The method of claim 2, further comprising:
in response to a frequency resource required by frequency band monitoring indication information received by the terminal being not located in the first frequency band, determining that a frequency switch is performed based on a first number of time units.

5. The method of claim 4, wherein the first number is determined based on at least one of:
a predefined rule;
a subcarrier spacing used before and after the frequency switch; or
a capability corresponding to the terminal.

6. The method of claim 4 or 5, comprising:
in response to the first number being larger than at least one of a second number or a third number, determining that a transceiving task is stopped;
or
in response to the first number being equal to at least one of a second number or a third number, determining that a transceiving task is stopped;
wherein the second number is a number of scheduling delays of the terminal and the third number is a number of hybrid automatic repeat request (HARQ) feedback delays.

7. The method of claim 4, after determining that the frequency switch is performed based on the first number of time units, the method further comprising:
in response to receiving a first indication message, determining that the first frequency band is re-monitored;
or
in response to not receiving other frequency band monitoring indication within a preset duration, determining that the first frequency band is re-monitored.

8. The method of claim 2, wherein the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

9. The method of claim 2, wherein determining the first frequency band in the BWP comprises:
determining the first frequency band in the BWP based on at least one of a frequency domain position or a number of frequency domain resources;
or
determining the first frequency band in the BWP based on a predefined rule;
or
determining the first frequency band in the BWP based on a pre-configuration.

10. The method of claim 9, wherein determining the first frequency band in the BWP based on the predefined rule comprises:
determining the first frequency band in the BWP based on a frequency domain position and a frequency domain width corresponding to a monitored control resource set;
or
determining the first frequency band in the BWP based on a frequency domain position and a frequency domain width corresponding to monitoring a synchronization signal block (SSB);
or
determining the first frequency band in the BWP based on a frequency domain position and a frequency domain width of a corresponding physical random access channel (PRACH).

11. The method of claim 9, wherein determining the first frequency band in the BWP based on the pre-configuration comprises:
determining the first frequency band in the BWP based on a frequency domain position where a last transceiving task stayed and a corresponding bandwidth.

12. A method for determining a BWP, applicable to a network side device, the method comprising:
determining the BWP, wherein a bandwidth of the BWP is larger than or equal to a first threshold value and the first threshold value is a maximum transceiving bandwidth corresponding to a capability of a terminal.

13. The method of claim 12, further comprising:
determining a first frequency band in the BWP, wherein a bandwidth of the first frequency band is less than the first threshold value; and
the first frequency band is a frequency band monitored by the terminal by default.

14. The method of claim 13, further comprising:
sending a first indication message, wherein the first indication message is configured to indicate that the terminal re-monitors the first frequency band after performing a frequency switch.

15. The method of claim 13, further comprising:
sending frequency band monitoring indication information, wherein the frequency band monitoring indication information is configured to indicate that the terminal performs a task comprised in the frequency band monitoring indication information.

16. The method of claim 13, wherein the other frequency band monitoring indication information is configured to indicate the terminal to perform at least one of:
a data transmission based on other frequency band;
a measurement based on other frequency band;
monitoring control information based on other frequency band;
sending control information based on other frequency band; or
sending a sounding channel based on other frequency band.

17. The method of claim 13, wherein determining the first frequency band in the BWP comprises:
determining the first frequency band in the BWP based on at least one of a frequency domain position or a number of frequency domain resources;
or
determining the first frequency band in the BWP based on a predefined rule;
or
determining the first frequency band in the BWP based on a pre-configuration.

18. The method of claim 17, wherein determining the first frequency band in the BWP based on the predefined rule comprises:
determining the first frequency band in the BWP based on a frequency domain position and a frequency domain width corresponding to a monitored control resource set;
or
determining the first frequency band in the BWP based on a frequency domain position and a frequency domain width corresponding to monitoring an SSB;
or
determining the first frequency band in the BWP based on a frequency domain position and a frequency domain width of a corresponding PRACH.

19. The method of claim 17, wherein determining the first frequency band in the BWP based on the pre-configuration comprises:
determining the first frequency band in the BWP based on a frequency domain position where a last transceiving task stayed and a corresponding bandwidth.

20. An apparatus for determining a BWP, applicable to a terminal, the apparatus comprising:
a determining module, configured to determine the BWP, wherein a bandwidth of the BWP is larger than or equal to a first threshold value and the first threshold value is a maximum transceiving bandwidth corresponding to a capability of the terminal.

21. An apparatus for determining a BWP, applicable to a network side device, the apparatus comprising:
a determining module, configured to determine the BWP, wherein a bandwidth of the BWP is larger than or equal to a first threshold value and the first threshold value is a maximum transceiving bandwidth corresponding to a capability of a terminal.

22. A device for determining a BWP, comprising:
a processor; and
a memory for storing instructions executable by the processor;
wherein, the processor is configured to perform the method for determining a BWP of any one of claims 1 to 11.

23. A device for determining a BWP, comprising:
a processor; and
a memory for storing instructions executable by the processor;
wherein, the processor is configured to perform the method for determining a BWP of any one of claims 12 to 19.

24. A non-transitory computer-readable storage medium, wherein when instructions in the storage medium are executed by a processor of a mobile terminal, the mobile terminal is caused to perform the method for determining a BWP of any one of claims 1 to 11.

25. A non-transitory computer-readable storage medium, wherein when instructions in the storage medium are executed by a processor of a mobile terminal, the mobile terminal is caused to perform the method for determining a BWP of any one of claims 12 to 19.
